# EUROPÄISCHE PATENTSCHRIFT

(11) **EP 1 463 772 B1**
(45) Veröffentlichungstag und Bekanntmachung des Hinweises auf die Patenterteilung: **05.03.2008**
(21) Anmeldenummer: 02795281.1
(22) Anmeldetag: 30.12.2002
(51) Int. Cl.: C08G 77/26, C08G 77/58, C09D 183/08, C09D 183/14

(54) **POLYSILOXAN-SOLE, VERFAHREN ZU IHRER HERSTELLUNG UND IHRE VERWENDUNG**
POLYSILOXANE SOLS, METHOD FOR THE PRODUCTION AND USE THEREOF
SOLS DE POLYSILOXANE, LEUR PROCEDE DE PRODUCTION ET LEUR UTILISATION

(30) Priorität: 12.01.2002 DE 10200929
(43) Veröffentlichungstag der Anmeldung: 06.10.2004
(73) Patentinhaber: BASF Coatings AG, 48165 Münster (DE)
(72) Erfinder: HOMMMES, Peter, 97299 Zell am Main (DE); ARMBRUST, Manuela, 48165 Münster (DE); RINK, Heinz-Peter, 48153 Münster (DE); HENKELMANN, Jochen, 68165 Mannheim (DE); THIEL, Lucien, 67117 Limburgerhof (DE)
(74) Vertreter: Leifert & Steffan
(86) Internationale Anmeldenummer: PCT/EP2002/014796
(87) Internationale Veröffentlichungsnummer: WO 2003/057761

(56) Entgegenhaltungen:
- EP-A- 1 036 827
- EP-B- 0 450 624
- EP-B- 0 682 033
- DE-A- 19 940 858
- US-B1- 6 288 198

## Beschreibung

Die vorliegende Erfindung betrifft neue Polysiloxan-Sole. Außerdem betrifft die vorliegende Erfindung ein neues Verfahren zur Herstellung von Polysiloxan-Solen. Des weiteren betrifft die vorliegende Erfindung die Verwendung der neuen Polysiloxan-Sole als Beschichtungsstoffe, Klebstoffe und Dichtungsmassen oder als Bestandteile von Beschichtungsstoffen, Klebstoffen und Dichtungsmassen.

Polysiloxan-Sole sind seit langem bekannt. Beispielhaft wird auf die Patentanmeldungen DE 199 10 876 A1, DE 38 36 815 A1, DE 198 4 3 581 A1, DE 199 09 877 A1, DE 139 40 858 A1, DE 198 16 136 A1, EP 0 365 027 A2 oder EP 0 450 625 A1 verwiesen. Die bekannten Polysiloxan-Sole werden beispielsweise unter der Marke Ormocer® (organically modified ceramic) vertrieben und dienen der Herstellung vergleichsweise dünner, kratzfester Beschichtungen.

Bei der Herstellung von Polysiloxan-Solen aus mehreren Ausgangsprodukten, wie z. B. Silanen, die jeweils einen stark hydrophilen oder hydrophoben Substitutienten tragen, besteht die Gefahr, dass sich beim Vermischen der hydrolysierbaren Siliziumverbindungen mit Wasser zwei Phasen bilden. Von diesen Phasen ist die untere reich an Wasser und hydrophilen Siliziumverbindungen, wogegen die obere Phase die hydrophoben Siliziumverbindungen enthält. Während in der unteren Phase wegen des Wasserüberschusses unkontrollierte Hydrolyse bis zum Gelieren auftreten kann, ist die obere Phase weitgehend der Veränderung durch Reaktionen entzogen. Es werden dann hinsichtlich ihrer chemischen Zusammensetzung und Verarbeitbarkeit unbrauchbare Polysiloxan-Sole erhalten. Dieses Problem ist besonders schwerwiegend, wenn carbamatfunktionelle Siliziumverbindungen eingesetzt werden.

Aus der europäischen Patentanmeldung EP 0 832 947 A2 ist die Oberflächemodifizierung von Nanopartikeln mit carbamatfunktionellen Siliziumverbindungen, wie dem Umsetzungsprodukt von 3-Isocyanatopropyl-1-trimethoxysilan und Hydroxypropylcarbamat, bekannt. Die oberflächenmodifizierten Nanopartikel werden als Zusatzstoffe in Klarlacken verwendet. Die bekannten Klarlacke liefern vergleichsweise dicke, hochkratzfeste Klarlackierungen, deren Kratzfestigkeit aber nicht an das Niveau der aus den Polysitoxan-Solen hergestellten Klarlackierungen heranreicht.

In US 6,288,198 B1 wird eine Hybrid-Beschichtungszusammensetzung beschrieben, die 5 - 80 Gew.-% eines aliphatischen Polyisocyanat-Aminosilan-Adduktes und 20 - 95 Gew.-% mindestens eines hydrolysierbaren Silans umfasst. Das mindestens eine hydrolysierbare Silan kann durch die Formal QSi(OX)₃ dargestellt werden, in der X einen C₁-C₄-Alkylrest darstellt und Q einen C₁-C₈-Alkylrest, eine Phenyl-, Methoxy- oder Ethoxygruppe und/oder ein daraus abgeleitetes Hydrolysat/Kondensat.

Aufgabe der vorliegenden Erfindung ist es, neue Polysiloxan-Sole bereitzustellen, die die Nachteile des Standes der Technik nicht mehr aufweisen, sondern die mit einem vergleichsweise geringen Anteil an organischen Bestandteilen, wie Bindemittel, Vernetzungsmittel und anderen lacktypische Zusatzstoffe, hochkratzfeste Beschichtungen einer vergleichsweise hohen Schichtdicke liefern, die für ihre technische Funktion notwendig und vorteilhaft ist. Dabei sollen insbesondere die neuen Klarlackierungen einen hohen Glanz, eine hohe Klarheit, eine hohe Schwitzwasserbeständigkeit, eine hervorragende Zwischenschichthaftung, eine besonders hohe Kratzfestigkeit sowie eine sehr gute Witterungsbeständigkeit und Chemikalienbeständigkeit aufweisen.

Außerdem ist es die Aufgabe der vorliegenden Erfindung, ein neues Verfahren zur Herstellung von Polyslloxan-Solen bereitzustellen, dass gleichfalls die Nachteile des Standes der Technik nicht mehr aufweist, sondern sicher und zuverlässig Polysiloxan-Sole liefert, ohne dass die Gefahr besteht, dass sich in dem Reaktionsgemisch zwei Phasen bilden.

Demgemäß wurden die neuen Polysiloxan-Sole gefunden, die durch Hydrolyse und Kondensation von mindestens zwei hydrolysierbaren Siliziumverbindungen herstellbar sind, wobei man
(1) in einer ersten Stufe
   (A) mindestens eine carbamatgruppenfreie Siliziumverbindung der allgemeinen Formel 1:

      (ZₒL-)ₘSi(H)ₙ(R)ₚ (I),

      worin die Indizes in die Variablen die folgende Bedeutung haben:
      - o: eine ganze Zahl von 1 bis 5;
      - m: 0, 1, 2 oder 3;
      - n: eine ganze Zahl von 1 bis 4;
      - p: 0, 1, 2 oder 3;
      - Z: reaktive funktionelle Gruppe, ausgenommen Carbamatgruppe;
      - L: mindestens zweibindige, verküpfende, organische Gruppe;
      - H: hydrolysierbare, einbindige, organische Gruppe oder hydrolysierbares Atom;
      - R: nicht hydrolysierbare, einbindige, organische Gruppe;
      in der Gegenwart
   (B) mindestens eines Vernetzungsmittels partiell hydrolysiert und kondensiert, wonach man
(2) in mindestens einer weiteren Stufe das in der Stufe (1) erhaltene Reaktionsgemisch (1) mit
   (C) mindestens einer hydrolysierbaren, carbamatfunktionellen Siliziumverbindung der allgemeinen Formel II:

      {[HRN-(O)C-O-]ᵣL-}ₛSi(H)ₜ(R)ᵤ (II),

      worin die Variablen L, H und R die vorstehend angegebene Bedeutung und die Indizes die folgende Bedeutung haben:
      - r: eine ganze Zahl von 1 bis 5;
      - s: 1, 2 oder 3;
      - t: 1, 2 oder 3;
      - u: 0, 1 oder 2;
      vollständig hydrolysiert und kondensiert.

Im folgenden werden die neuen Polysiloxan-Sole, herstellbar durch Hydrolyse und Kondensation von mindestens zwei Siliziumverbindungen, als »erfindungsgemäße Sole« bezeichnet.

Außerdem wurde das neue Verfahren zur Herstellung von Polysiloxan-Solen durch Hydrolyse und Kondensation mindestens zweier hydrolysierbarer Siliziumverbindungen gefunden, bei dem man
(1) in einer ersten Stufe
   (A) mindestens eine carbamatgruppenfreie Siliziumverbindung der allgemeinen Formel I:

      (ZₒL-)ₘSi(H)ₙR)ₚ (I),

      worin die Indizes in die Variablen die folgende Bedeutung haben:
      - o: eine ganze Zahl von 1 bis 5;
      - m: 0, 1, 2 oder 3;
      - n: eine ganze Zahl von 1 bis 4;
      - p: 0, 1, 2 oder 3;
      - Z: reaktive funktionelle Gruppe, ausgenommen Carbamatgruppe;
      - L: mindestens zweibindige, verküpfende, organische Gruppe;
      - H: hydrolysierbare, einbindige, organische Gruppe oder hydrolysierbares Atom;
      - R: nicht hydrolysierbare, einbindige, organische Gruppe;
      in der Gegenwart
   (B) mindestens eines Vernetzungsmittels partiell hydrolysiert und kondensiert, wonach man
(2) in einer weiteren Stufe das in der Stufe (1) erhaltene Reaktionsgemisch (1) mit
   (C) mindestens einer hydrolysierbaren, carbamatfunktionellen Siliziumverbindung der allgemeinen Formel II:

      {[HRN-(O)C-O-]ᵣL-}ₛSi(H)ₜ(R)ᵤ (II),

      worin die Variablen L, H und R die vorstehend angegebene Bedeutung und die Indizes die folgende Bedeutung haben:
      - r: eine ganze Zahl von 1 bis 5;
      - s: 1, 2 oder 3;
      - t: 1, 2 oder 3;
      - u: 0, 1 oder 2;
   vollständig hydrolysiert und kondensiert.

Im folgenden wird das neue Verfahren zur Herstellung von Polysiloxan-Solen durch Hydrolyse und Kondensation mindestens zweier hydrolysierbarer Siliziumverbindungen als »erfindungsgemäßes Verfahren« bezeichnet.

Des weiteren wurde die neue Verwendung der erfindungsgemäßen Sole als Beschichtungsstoffe, -Klebstoffe und -Dichtungsmassen, insbesondere als Klarlacke, zur Herstellung von hochkratzfesten Beschichtungen, Klebschichten und Dichtungen, insbesondere von Klarlackierungen, gefunden.

Nicht zuletzt wurde die neue Verwendung der erfindungsgemäßen Sole als Bestandteil von Beschichtungsstoffen, -Klebstoffen und - Dichtungsmassen, insbesondere von Klarlacken, zur Herstellung von Beschichtungen, Klebschichten und Dichtungen, insbesondere von Klarlackierungen, gefunden.

Ferner wurde die neue Verwendung der erfindungsgemäßen Sole zur Herstellung von Formkörpern, insbesondere optischen Formkörpern, und freitragenden Folien gefunden.

Weitere Erfindungsgegenstände gehen aus der Beschreibung hervor.

Im Hinblick auf den Stand der Technik war es überraschend und für den Fachmann nicht vorhersehbar, dass die Aufgabe die der vorliegenden Erfindung zugrundelag, mit Hilfe der erfindungsgemäßen Sole gelöst werden konnte. Besonders überraschte, dass die erfindungsgemäßen Sole bei Raumtemperatur hergestellt und gelagert werden konnten, was logistisch, apparativ, verfahrenstechnisch und sicherheitstechnisch von großem Vorteil war.

Insbesondere überraschte, dass bei dem erfindungsgemäßen Verfahren das Reaktionsgemisch keine zwei Phasen mehr bildete.

Noch mehr überraschte, dass die erfindungsgemäßen Sole auch ohne die Zugabe von üblichen und bekannten Bindemitteln vergleichsweise dicke Beschichtungen, insbesondere Klarlackierungen, von hohem Glanz, hoher Klarheit, hoher Schwitzwasserbeständigkeit, hervorragender Zwischenschichthaftung, besonders hoher Kratzfestigkeit sowie von sehr guter Witterungsbeständigkeit und Chemikalienbeständigkeit lieferten.

Insgesamt überraschte die außerordentlich breite Anwendbarkeit der erfindungsgemäßen Sole, die sich von pigmentierten und nicht pigmentierten Beschichtungsstoffen über pigmentierte und nicht pigmentierte Klebstoffe bis hin zu pigmentierten und nicht pigmentierten Dichtungsmassen spannte.

Die erfindungsgemäßen Sole sind mit Hilfe des erfindungsgemäßen Verfahrens herstellbar.

Bei dem erfindungsgemäßen Verfahren wird in einer ersten Stufe (1) mindestens eine, insbesondere eine, carbamatgruppenfreie Siliziumverbindung (A) der allgemeinen Formel I in der Gegenwart mindestens eines, insbesondere eines, Vernetzungsmittels (B) partiell hydrolysiert und kondensiert.

Bei der partiellen Hydrolyse und Kondensation bleiben noch genügend reaktive funktionelle Gruppen im resultierenden Sol oder Reaktionsgemisch (1) für die vollständige Hydrolyse und Kondensation in mindestens einer weiteren Stufe (2) übrig.

Vorzugsweise wird die partielle Hydrolyse und Kondensation in der Stufe (1) bei Temperaturen unter 40, vorzugsweise unter 35, besonders bevorzugt unter 30 °C und insbesondere bei Raumtemperatur durchgeführt.

Das erste wesentliche Ausgangsprodukt in der Stufe (1) ist die hydrolysierbare carbamatgruppenfreie Siliziumverbindung (A) der allgemeinen Formel I.

In der allgemeinen Formel I haben die Indizes die folgende Bedeutung:
- o: eine ganze Zahl von 1 bis 5, insbesondere 1;
- m: 0, 1, 2 oder 3, vorzugsweise 1, insbesondere 0;
- n: eine ganze Zahl von 1 bis 4, vorzugsweise 1 bis 3, insbesondere 3;
- p: 0, 1, 2 oder 3, vorzugsweise 1 bis 3, insbesondere 1.

Die Variable Z steht für eine reaktive funktionelle Gruppe, ausgenommen eine Carbamatgruppe.

Vorzugsweise werden die Gruppen Z aus der Gruppe, bestehend aus
(Z 1) reaktiven funktionellen Gruppen, die mindestens eine mit aktinischer Strahlung aktivierbare Bindung enthalten, und
(Z 2) reaktiven funktionellen Gruppen, die mit Gruppen ihrer Art ("mit sich selbst") und/oder mit komplementären reaktiven funktionellen Gruppen thermisch initiierte Reaktionen eingehen,
ausgewählt.

Hier und im Folgenden wird unter aktinischer Strahlung elektromagnetische Strahlung, wie nahes Infrarot (NIR), sichtbares Licht, UV-Strahlung und Röntgenstrahlung, insbesondere UV-Strahlung, oder elektromagnetische Strahlung, wie Elektronenstrahlung, verstanden.

Beispiele geeigneter mit aktinischer Strahlung aktivierbarer Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder - Doppelbindungen. Von diesen werden die Doppelbindungen, insbesondere die Kohlenstoff-Kohlenstoff-Doppelbindungen ("Doppelbindungen"), bevorzugt angewandt.

Gut geeignete Doppelbindungen liegen beispielsweise in (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyl- oder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen (Z 1) vor. Von diesen sind (Meth)Acrylatgruppen (Z1) von besonderem Vorteil.

Vorzugsweise werden die reaktiven funktionellen Gruppen (Z 2) aus der Gruppe, bestehend aus blockierten Isocyanatgruppen, Harnstoffgruppen, Epoxidgruppen, Gruppen -CH₂OR, worin R die nachstehend angegebene Bedeutung hat und insbesondere für Methyl, Ethyl, n-Propyl und n-Butyl, steht Carboxylgruppen und Anhydridgruppen, ausgewählt. Als Blockierungsmittel für die Isocyanatgruppen kommen die in der deutschen Patentanmeldung DE 199 24 172 A1, Seite 5, Zeile 64, bis Seite 6, Zeile 28, beschriebenen Blockierungsmittel in Betracht.

Des weiteren steht in der allgemeinen Formel I die Variable R für eine nicht hydrolysierbare, einbindige organische Gruppe.

Vorzugsweise werden die Gruppen R aus der Gruppe, bestehend aus einbindigen Gruppen, die sich von mindestens einer der folgenden organischen Verbindungen ableiten:
(i) Substituierte und unsubstituierte, kein oder mindestens ein Heteroatom in der Kette und/oder im Ring enthaltende, lineare oder verzweigte Alkane, Alkene, Cycloalkane, Cycloalkene, Alkylcycloalkane, Alkylcycloalkene, Alkenylcycloalkane oder Alkenylcycloalkene;
(ii) substituierte und unsubstituierte Aromaten oder Heteroamaten; sowie
(iii) Alkyl-, Alkenyl-, Cycloalkyl-, Cycloalkenyl-, Alkylcyloalkyl-, Alkylcycloalkenyl-, Alkenylcycloalkyl- oder Alkenylcycloalkenyl-substitiuierte Aromaten oder Heteroaromaten, deren Substituenten substituiert oder unsubstituiert sind und kein oder mindestens ein Heteroatom in ihrer Kette und/oder ihrem Ring enthalten;
ausgewählt.

Beispiele geeigneter Heteroatome sind Sauerstoff -, Stickstoff -, Bor -, Silizium-, Schwefel- oder Phosphoratome.

Beispiele geeigneter Substituenten, für die vorstehend genannten Gruppen R sind Halogenatome, insbesondere Fluor- und Chloratome, Nitrogruppen oder Nitrilgruppen sowie die in der deutschen Patentanmeldung DE 199 10 876 A1, Seite 2, Zeilen 42 bis 45, beschriebenen Substituenten.

Beispiele geeigneter Aromaten sind Benzol und Naphthalin.

Beispiele geeigneter Heteroaromaten sind Thiophen, Pyridin oder Triazin.

Beispiele geeigneter Alkane sind solche mit 2 bis 20 C-Atomen im Molekül wie Ethan, Propan, Butan, Isobutan, Pentan, Neopentan, Hexan, Heptan, Octan, Isooctan, Nonan, Dodecan, Hexadecan oder Eicosan.

Beispiele geeigneter Alkene sind Ethylen und Propylen.

Beispiele geeigneter Cycloalkane sind Cyclopentan und Cyclohexan.

Beispiele geeigneter Cycloalkene sind Cyclopenten und Cyclohexen.

Beispiele geeigneter Alkylcycloalkane sind Methylcyclopentan und Methylcyclohexan.

Beispiele geeigneter Alkylcycloalkene sind Methylcyclopenten und Methylcyclohexen.

Beispiele geeigneter Alkenylcycloalkane sind Allyl- und Vinylcyclopentan und Allyl- und Vinylcyclohexan.

Beispiele geeigneter Alkenylcycloalkene sind Vinylcyclopenten und Vinylcyclohexen.

Beispiele geeigneter Alkyl-, Alkenyl-, Cycloalkyl-, Cycloalkenyl-, Alkylcyloalkyl-, Alkylcycloalkenyl-, Alkenylcycloalkyl- oder Alkenylcycloalkenylsubstituenten sind Methyl, Ethyl, Propyl, Isopropyl, n-Butyl, sec.-Butyl, tert.-Butyl, Vinyl, Allyl, Cyclohexyl, Cyclohexenyl, 4-Methylcyclohexyl, 4-Methylcyclohexenyl, 3-Allylcyclohexenyl oder 4-Vinylcyclohexenyl.

Weitere Beispiele geeigneter Gruppen R sind aus der deutschen Patentanmeldung DE 199 10 876 A1, Seite 2, Zeilen 40 bis 42, bekannt.

Vorzugsweise leiten sich die Gruppen R von organischen Verbindungen ab, die als solche unsubstituiert sind oder deren Substituenten unsubstituiert sind.

Vorteilhafterweise enthalten diese Verbindungen auch keine Heteroatome in ihren Ketten und/oder in ihren Ringen und/oder in den Ketten und/oder den Ringen ihrer Substitutienten.

Besondere Vorteile resultieren, wenn sich die Gruppen R von linearen Alkanen ableiten, welche die vorstehend genannten vorteilhaften Bedingungen erfüllen. Weitere Vorteile resultieren, wenn sie sich von Methan, Ethan, Propan, Butan, Pentan oder Hexan, insbesondere Methan und Ethan, ableiten.

Die Variable L steht in der allgemeinen Formel I für eine mindestens zweibindige, insbesondere zweibindige, verknüpfende, organische Gruppe.

Vorzugsweise werden die zweibindigen organischen vernüpfenden Gruppen L aus der Gruppe, bestehend aus mindestens zweibindigen, insbesondere zweibindigen, aliphatischen, aromatischen, cycloaliphatischen und aromatisch-cycloaliphatischen sowie Heteroatome enthaltenden aliphatischen, aromatischen, cycloaliphatischen und aromatisch-cycloaliphatischen Kohlenwasserstoffresten, ausgewählt.

Beispiele geeigneter Gruppen L sind
(1) substituierte oder unsubstituierte, bevorzugt unsubstituierte, lineare oder verzweigte, vorzugsweise lineare, Alkandiyl-Reste mit 4 bis 30, bevorzugt 5 bis 20 und insbesondere 6 Kohlenstoffatomen, die innerhalb der Kohlenstoffkette auch cyclische Gruppen enthalten können, insbesondere Trimethylen, Tetramethylen, Pentamethylen, Hexamethylen, Heptamethylen, Octamethylen, Nonan-1,9-diyl, Decan-1,10-diyl, Undecan-1,11-diyl Dodecan-1,12-diyl, Tridecan-1,13-diyl, Tetradecan-1,14-diyl, Pentadecan-1,15-diyl, Hexadecan-1,16-diyl, Heptadecan-1,17-diyl, Octadecan-1,18-diyl, Nonadecan-1,19-diyl oder Eicosan-1,20-diyl, bevorzugt Tetramethylen, Pentamethylen, Hexamethylen, Heptamethylen, Octamethylen, Nonan-1,9-diyl, Decan-1,10-diyl, 2-Heptyl-1-pentyl-cyclohexan-3,4-bis(non-9-yl), Cyclohexan-1,2-, -1,4- oder -1,3-bis(methyl), Cyclohexan-1,2-, 1,4- oder 1,3-bis(eth-2-yl), Cyclohexan-1,3-bis(prop-3-yl) oder Cyclohexan-1,2-, 1,4- oder 1,3-bis(but-4-yl);
(2) zweiwertige Polyesterreste mit wiederkehrenden Polyesteranteilen der Formel -(-CO-(CHR³)ₓ- CH₂-O-)- aus. Hierbei ist der Index x bevorzugt 4 bis 6 und der Substitutent R³ = Wasserstoff, ein Alkyl-, Cycloalkyl- oder Alkoxy-Rest. Kein Substituent enthält mehr als 12 Kohlenstoffatome;
(3) lineare Polyetherreste, vorzugsweise mit einem zahlenmittleren Molekulargewicht von 400 bis 5.000, insbesondere von 400 bis 3.000, die sich von Poly(oxyethylen)glykolen, Poly(oxypropylen)glykolen und Poly(oxybutylen)glykolen ableiten;
(4) lineare Siloxanreste, wie sie beispielsweise in Siliconkautschuken vorliegen, hydrierte Polybutadien- oder Polyisoprenreste, statistische oder alternierende Butadien-Isopren-Copolymerisatreste oder Butadien-Isopren-Pfropfmischpolymerisatreste, die noch Styrol einpolymerisiert enthalten können, sowie Ethylen-Propylen-Dienreste;
(5) Phen-1,4-, -1,3- oder -1,2-ylen, Naphth-1,4-, -1,3-, -1,2-, -1,5- oder - 2,5-ylen, Propan-2,2-di(phen-4'-yl), Methan-di(phen-4'-yl), Diphenyl-4,4'-diyl oder 2,4- oder 2,6-Toluylen; oder
(6) Cycloalkandiyl-Reste mit 4 bis 20 Kohlenstoffatomen, wie Cyclobutan-1,3-diyl, Cyclopentan-1,3-diyl, Cyclohexan-1,3- oder - 1,4-diyl, Cycloheptan-1,4-diyl, Norbornan-1,4-diyl, Adamantan-1,5-diyl, Decalin-diyl, 3,3,5-Trimethyl-cyclohexan-1,5-diyl, 1-Methylcyclohexan-2,6-diyl, Dicyclohexylmethan-4,4'-diyl, 1,1'-Dicyclohexan-4,4'-diyl oder 1,4-Dicyclohexylhexan-4,4"-diyl, insbesondere 3,3,5-Trimethyl-cyclohexan-1,5-diyl oder Dicyclohexylmethan-4,4'-diyl.

Besonders bevorzugt werden die verknüpfenden Gruppen L (1), ganz besonders bevorzugt Trimethylen, Tetramethylen, Pentamethylen, Hexamethylen, Heptamethylen oder Octamethylen und insbesondere Trimethylen verwendet.

In der allgemeinen Formel I steht die Variable H für eine hydrolysierbare, einbindige, organische Gruppe oder für ein hydrolysierbares Atom.

Vorzugsweise werden die hydrolysierbaren, einbindigen, organischen Gruppen H aus der Gruppe, bestehend aus Resten der allgemeinen Formel V:

-X-R (V),

worin die Variable R die vorstehend angegebene Bedeutung hat und die Variable X für ein Sauerstoffatom, ein Schwefelatom, eine Oxycarbonylgruppe oder eine Gruppe >NR² (mit R² = Wasserstoffatom oder Alkylgruppe mit 1 bis 4 Kohlenstoffatomen) steht; und die hydrolysierbaren Atome H aus der Gruppe, bestehend aus Wasserstoffatomen und Halogenatomen, insbesondere Chlor und Brom, ausgewählt. Vorzugsweise steht die Variable X für ein Sauerstoffatom.

Beispiele für gut geeignete hydrolysierbare Siliziumverbindungen (A) sind 3-Isocyanatopropyl-trimethoxysilan -triethoxysilan, -dimethoxy-ethoxysilan, -methoxy-diethoxy-silan, Di-(3-isocyanatopropyl)-dimethoxysilan, - diethoxysilan und -methoxy-ethoxy-silan und Tris-(3-isocyanatopropyl)-methoxysilan und -ethoxysilan, insbesondere 3-Isocyanatopropyltriethoxysilan, die mit einer stöchiometrischen Menge der vorstehend beschriebenen Blockierungsmittel blockiert wurden; 3-Glycidyloxypropyltrimethoxysilan, Methyltriethoxysilan, Methyltrimethoxysilan, Tetramethylorthosilikat, Tetraethylorthosilikat, Dimethyl-, Diethyl-, Dipropyl-, Methylethyl-, Methylpropyl- und Ethylpropyldimethoxysilan, Dimethyl-, Diethyl-, Dipropyl-, Methylethyl-, Methylpropyl- und Ethylpropyldiethoxysilan, Dimethyl-, Diethyl-, Dipropyl-, Methylethyl-, Methylpropyl- und Ethylpropyldipropoxysilan, Dimethyl-, Diethyl-, Dipropyl-, Methylethyl-, Methylpropyl- und Ethylpropylmethoxyethoxysilan, Dimethyl-, Diethyl-, Dipropyl-, Methylethyl-, Methylpropyl und Ethylpropylmethoxypropoxysilan sowie Dimethyl-, Diethyl-, Dipropyl-, Methylethyl-, Methylpropyl und Ethylpropylethoxypropoxysilan. Weitere Beispiele sind aus der europäischen Patentanmeldung EP 0 872 500 A1, Seite 4, Zeilen 37 bis 49, bekannt. Besonders bevorzugt werden Methyltriethoxysilan gegebenenfalls i. V. m. 3-Glycidyloxypropyltrimethoxysilan verwendet.

Die Menge an hydrolysierbaren Siliziumverbindungen (A), die zur Herstellung der erfindungsgemäßen Sole nach dem erfindungsgemäßen Verfahren eingesetzt wird, kann breit variieren und richtet sich nach den Erfordernissen des Einzelfalls. Vorzugsweise werden die hydrolysierbaren Siliziumverbindungen (A) in einer Menge von 1 bis 50, bevorzugt 2 bis 45, besonders bevorzugt 3 bis 40, ganz besonders bevorzugt 4 bis 35 und insbesondere 5 bis 30 Gew.-%, jeweils bezogen auf die Gesamtmenge aller Ausgangsprodukte in den Stufen (1) und (2), eingesetzt.

Das weitere wesentliche Ausgangsprodukt in der Stufe (1) ist mindestens ein, insbesondere ein, Vernetzungsmittel (B). Im Grunde kommen alle Vernetzungsmittel in Betracht, wie sie für Einkomponentensysteme üblicherweise eingesetzt werden. Beispiele geeigneter Vernetzungsmittel (B) sind aus der deutschen Patentanmeldung DE 199 24 172 A1, Seite 5, Zeile 64, bis Seite 6, Zeile 63, bekannt. Vorzugsweise werden die Vernetzungsmittel (B) aus der Gruppe, bestehend aus blockierten Polyisocyanaten, Tris(alkoxycarbonylamino)triazinen, Polyepoxiden, Aminoplastharzen oder Polyanhydriden, ausgewählt. Besonders bevorzugt werden Aminoplastharze angewandt.

Die Menge an Vernetzungsmittel (B), die in der Stufe (1) eingesetzt wird, kann breit variieren und richtet sich nach den Erfordernissen des Einzelfalls, insbesondere nach der Funktionalität des Vernetzungsmittels (B). Vorzugsweise wird es in einer Menge von 5 bis 60, bevorzugt 10 bis 55, besonders bevorzugt 15 bis 50, ganz besonders bevorzugt 20 bis 45 und insbesondere 25 bis 45 Gew.%, jeweils bezogen auf die Summe aller Ausgangsprodukte in den Stufen (1) und (2), eingesetzt.

Das dritte wesentliche Ausgangsprodukt in der Stufe (1) ist Wasser. Die Menge des Wassers kann breit variieren und richtet sich nach den Erfordernissen des Einzelfalls, insbesondere nach der Funktionalität der anderen Ausgangsprodukte, insbesondere der carbamatgruppenfreien, hydrolysierbaren Siliziumverbindungen (A). Vorzugsweise liegt die Menge des Wassers bei 1 bis 20, bevorzugt 2 bis 18, besonders bevorzugt 3 bis 14, ganz besonders bevorzugt 4 bis 12 und insbesondere 6 bis 10 Gew.%, jeweils bezogen auf die Summe aller Ausgangsprodukte in den Stufen (1) und (2).

Die Wassermenge wird so zudosiert, dass lokale Überkonzentrationen vermieden werden. Dies kann über die Zulaufgeschwindigkeit geregelt werden oder es gelingt z.B. durch Eintragen der Wassermenge in das Reaktionsgemisch mit Hilfe von feuchtigkeitsbeladenen Adsorbentien, z.B. Kieselgel oder Molekularsieben, wasserhaltigen organischen Lösungsmitteln, z.B. 80%igem Ethanol, oder Salzhydraten, z.B. CaCl₂ x 6H₂O. Vorzugsweise wird indes deionisiertes Wasser angewandt.

Bei der partiellen Hydrolyse und Kondensation in der Stufe (1) kann noch mindestens eine der nachstehend beschriebenen Verbindungen (D) bis (G) als Ausgangsprodukt zugegen sein.

So kann die Hydrolyse und Kondensation in der Gegenwart mindestens einer hydrolysierbaren Metallverbindung (D) der allgemeinen Formel III:

HᵥMR_{w-v} (III),

worin die Indizes v und w eine ganze Zahl zwischen 1 und 4 bedeuten, mit der Maßgabe, dass v + w = 2, 3 oder 4, insbesondere 3 oder 4, M für Zinn, Bor, Aluminium, Titan oder Zirkonium, insbesondere Aluminium, steht und die Variablen H und R die vorstehend angegebene Bedeutung haben.

Beispiele geeigneter hydrolysierbarer Metallverbindungen (D) der allgemeinen Formel III sind beispielsweise aus der europäischen Patentanmeldung EP 0 450 625 A1, Seite 4, Zeile 47, bis Seite 5, Zeile 32, bekannt, wobei die dort erwähnten Vanadinylverbindungen anstelle oder zusätzlich zu den hydrolysierbaren Metallverbindungen (D) eingesetzt werden können.

Besonders bevorzugt wird Aluminium-tri-sec.-butylat verwendet.

Sofern verwendet, kann die Menge an hydrolysierbaren Metallverbindungen (D) der allgemeinen Formel III breit variieren und richtet sich nach den Erfordernissen des Einzelfalls. Vorzugsweise werden die hydrolysierbaren Metallverbindungen (D) in einer Menge von 1 bis 25, bevorzugt 2 bis 22, besonders bevorzugt 3 bis 20, ganz besonders bevorzugt 4 bis 18 und insbesondere 5 bis 15 Gew.-%, jeweils bezogen auf die Gesamtmenge aller Ausgangsprodukte in den Stufen (1) und (2), eingesetzt.

Darüber hinaus kann die partielle Hydrolyse und Kondensation in der Stufe (1) in der Gegenwart mindestens einer organischen Thioverbindung (E) der allgemeinen Formel IV durchgeführt werden:

S(-LYₒ)₂ (IV),

worin der Index n und die Variable Z die vorstehend angegebene Bedeutung haben.

Beispiele für besonders gut geeignete organische Thioverbindungen (E) sind Bis-(6-hydroxyhexyl)-, Bis-(5-hydroxypentyl)-, Bis-(4-hydroxybutyl)-, Bis-(3-hydroxypropyl)- und Bis-(2-hydroxyethyl)-sulfid (Thiodiethanol).

Sofern verwendet, kann die Menge an organischen Thioverbindungen (E) der allgemeinen Formel IV, die für die Herstellung der erfindungsgemäßen Sole nach dem erfindungsgemäßen Verfahren eingesetzt wird, breit variieren und richtet sich nach den Erfordernissen des Einzelfalls.

Im Rahmen des erfindungsgemäßen Verfahrens kann die partielle Hydrolyse und Kondensation in der Stufe (1) von einer Komplexierung begleitet sein. Dabei werden die Komplexierungsmittel (F) aus der Gruppe der organischen Verbindungen, die Chelatliganden bilden, ausgewählt. Vorzugsweise handelt es sich dabei um nicht aromatische organische Verbindungen. Die organischen Verbindungen (F) enthalten mindestens zwei funktionelle Gruppen, welche an Metallatome oder -ionen koordinieren können. Üblicherweise handelt es sich bei diesen funktionellen Gruppen um Elektronendonatoren, welche Elektronen an Metallatome oder -ionen als Elektronenakzeptoren abgeben. Für das erfindungsgemäße Verfahren sind grundsätzlich alle organischen Verbindungen (G) der genannten Art geeignet, solange sie nicht die Hydrolyse und Kondensation und/oder die Vernetzung zur fertigen Beschichtung nachteilig beeinflussen oder gar völlig verhindern. Beispiele geeigneter organischer Verbindungen (F) sind Dimethylglyoxim oder Verbindungen, die Carbonylgruppen in 1,3-Stellung enthalten, wie Acetylaceton oder Acetessigsäureethylester. Ergänzend wird auf Römpp Chemie Lexikon, Georg Thieme Verlag, Stuttgart, 1989, Band 1, Seite 634, verwiesen.

Sofern verwendet, kann die Menge an Komplexierungsmitteln (F), die für die Herstellung der erfindungsgemäßen Sole nach dem erfindungsgemäßen Verfahren eingesetzt wird, breit variieren und richtet sich nach den Erfordernissen des Einzelfalls. Vorzugsweise werden die Komplexierungsmittel (F) in einer Menge von 1 bis 25, bevorzugt 2 bis 22, besonders bevorzugt 2,5 bis 20, ganz besonders bevorzugt 3 bis 18 und insbesondere 3,5 bis 15 Gew.-%, jeweils bezogen auf die Gesamtmenge aller Ausgangsprodukte in den Stufen (1) und (2), eingesetzt.

Die partielle Hydrolyse und Kondensation sowie gegebenenfalls die Komplexierung der vorstehend beschriebenen Ausgangsprodukte in der Stufe (1) kann gegebenenfalls in Anwesenheit von Lösemitteln, vorzugsweise aromatenfreien Lösemitteln, durchgeführt werden. Vorzugsweise wird lösemittelfrei gearbeitet.

Die partielle Hydrolyse und Kondensation sowie gegebenenfalls die Komplexierung der vorstehend beschriebenen Ausgangsprodukte in der Stufe (1) kann gegebenenfalls in Gegenwart eines Hydrolyse- und Kondensationskatalysators (G) durchgeführt werden.

Als Hydrolyse- und Kondensationskatalysatoren (G) eignen sich protonen- oder hydroxylionenabspaltende Verbindungen und Amine. Spezielle Beispiele sind organisch oder anorganische Säuren, wie Salzsäure, Schwefelsäure, Phosphorsäure, Ameisensäure oder Essigsäure sowie organische oder anorganische Basen wie Ammoniak, Alkali- oder Erdalkalimetallhydroxide, z.B. Natrium, Kalium- oder Calciumhydroxid, und im Reaktionsmedium lösliche Amine, z.B. niedere Alkylamine oder Alkanolamine. Sofern Katalysatoren (G) verwendet werden, sind flüchtige Säuren und Basen, insbesondere Salzsäure, Essigsäure, Ammoniak oder Triethylamin besonders bevorzugt.

Das in der Stufe (1) des erfindungsgemäßen Verfahrens resultierende Reaktionsgemisch (1) wird in mindestens einer, insbesondere einer weiteren Stufe (2) mit mindestens einer, insbesondere einer, hydrolysierbaren, carbamatfunktionellen Siliziumverbindung (C) der allgemeinen Formel II und Wasser versetzt, wodurch die Hydrolyse und Kondensation vollständig abläuft und das erfindungsgemäße Sol resultiert.

Vorzugsweise wird die Hydrolyse und Kondensation in der Stufe (2) bei Temperaturen unter 40, bevorzugt 35, besonders bevorzugt 30 °C und insbesondere bei Raumtemperatur durchgeführt.

In der allgemeinen Formel **II** haben die Variablen L, H und R die vorstehend angegebene Bedeutung. Die Variable R¹ und die Indizes haben die folgende Bedeutung:
- R¹: Wasserstoffatom oder Gruppe R, insbesondere Wasserstoffatom;
- r: eine ganze Zahl von 1 bis 5, insbesondere 1;
- s: 1, 2 oder 3, insbesondere 1;
- t: 1, 2 oder 3, insbesondere 3;
- u: 0, 1 oder 2, insbesondere 0.

Beispiele geeigneter hydrolysierbarer, carbamatfunktioneller Siliziumverbindungen (C) sind 3-O-Carbamatopropyl-trimethoxysilan, triethoxysilan, -tripropoxysilan und -tributoxysilan oder das in der europäischen Patentanmeldung EP 0 832 947 A1, Seite 8, Zeilen 8 bis 17, beschriebene Umsetzungsprodukt von 3-isocyanatopropyl-trimethoxysilan und Hydroxypropylcarbamat.

Die Menge der in der Stufe (2) eingesetzten hydrolysierbaren, carbamatfunktionellen Siliziumverbindung (C) kann breit variieren und richtet sich nach den Erfordernissen des Einzelfalls, insbesondere nach der Anzahl der Carbamatgruppen, die in dem erfindungsgemäßen Sol vorhanden sein sollen, und nach der Funktionalität der übrigen Ausgangsprodukte. Vorzugsweise liegt die Menge bei 5 bis 40, bevorzugt 6 bis 35, besonders bevorzugt 7 bis 30, ganz besonders bevorzugt 8 bis 25 und insbesondere 10 bis 20 Gew.%, jeweils bezogen auf die Summe aller Ausgangsprodukte in den Stufen (1) und (2).

Zur Vervollständigung der Hydrolyse und Kondensation wird in der Stufe (2) noch Wasser zugesetzt, wobei die vorstehend beschriebenen Methoden angewandt werden. Die Menge des in der Stufe (2) eingesetzten Wassers kann breit variieren und richtet sich nach den Erfordernissen des Einzelfalls, insbesondere nach der Funktionalität der übrigen Ausgangsprodukte. Vorzugsweise werden 0,5 bis 10, bevorzugt 0,7 bis 9, besonders bevorzugt 0,8 bis 8, ganz besonders bevorzugt 1 bis 7 und insbesondere 1,5 bis 6 Gew.%, jeweils bezogen auf die Summe aller Ausgangsprodukte in den Stufen (1) und (2), eingesetzt.

Die erfindungsgemäßen Sole können noch übliche und bekannte lacktypische Zusatzstoffe (H) in wirksamen Mengen enthalten, die den erfindungsgemäßen Solen vorzugsweise nach ihrer Herstellung zugesetzt werden können. Geeignet sind alle Zusatzstoffe (H), welche das Eigenschaftsprofil der aus den erfindungsgemäßen Solen hergestellten Beschichtungen, Klebschichten und Dichtungen, insbesondere die optischen Eigenschaften (Appearance) und Kratzfestigkeit der Beschichtungen, nicht nachteilig beeinflussen, sondern in vorteilhafter Weise variieren und verbessern. Beispiele geeigneter Zusatzstoffe (H) dieser Art sind aus der deutschen Patentanmeldung DE 199 2 4 172 A1, Seite 5, Zeile 22, bis Seite 7, Zeile 48, oder der deutschen Patentanmeldung DE 199 14 896 A1, Spalte 11, Zeile 6, bis Spalte 15, Zeile 54, bekannt.

Sollen die erfindungsgemäßen Sole der Herstellung von farb- und/oder effektgebenden Beschichtungen dienen, enthalten sie mindestens ein Pigment als Zusatzstoff (H). Vorzugsweise werden die Pigmente (H) aus der Gruppe, bestehend aus üblichen und bekannten organischen und anorganischen farb- und/oder effektgebenden, elektrisch leitfähigen, magnetisch abschirmenden und fluoreszierenden Pigmenten und üblichen und bekannten organischen und anorganischen Füllstoffen, ausgewählt.

Außerdem können die erfindungsgemäßen Sole noch übliche und bekannte lacktypische Bindemittel (J) enthalten. Beispiele für geeignete Bindemittel (J) sind statistisch, alternierend und/oder blockartig aufgebaute lineare und/oder verzweigte und/oder kammartig aufgebaute (Co)Polymerisate von ethylenisch ungesättigten Monomeren, Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, "Bindemittel", verwiesen.

Beispiele geeigneter (Co)Polymerisate (J) sind (Meth)Acrylat(co)polymerisate oder partiell verseifte Polyvinylester, insbesondere (Meth)Acrylatcopolymerisate.

Beispiele geeigneter Polyadditionsharze und/oder Polykondensationsharze (J) sind Polyester, Alkyde, Polyurethane, Polylactone, Polycarbonate, Polyether, Epoxidharz-Amin-Addukte, Polyharnstoffe, Polyamide, Polyimide, Polyester-Polyurethane, Polyether-Polyurethane oder Polyester-Polyether-Polyurethane, insbesondere Polyester-Polyurethane.

Der Festkörpergehalt der erfindungsgemäßen Sole kann sehr breit variieren und richtet sich nach dem jeweiligen Verwendungszweck. Werden die erfindungsgemäßen Sole beispielsweise als nicht pigmentierte Beschichtungsstoffe zur Herstellung dünner, hochkratzfester Beschichtungen einer Schichtdicke < 5 µm verwendet, liegt der Festkörpergehalt vorzugsweise unter 50, bevorzugt unter 40, besonders bevorzugt unter 30 und insbesondere unter 20 Gew.-%, bezogen auf das jeweilige erfindungsgemäße Sol. Sollen die erfindungsgemäßen Sole beispielsweise als Klarlacke verwendet werden, liegt der Festkörpergehalt vorzugsweise bei 10 bis 90, bevorzugt 15 bis 85, besonders bevorzugt 20 bis 80, ganz besonders bevorzugt 25 bis 75 und insbesondere 30 bis 70 Gew.-%, bezogen auf das jeweilige erfindungsgemäße Sol. Vorteilhafte Festkörpergehalte von erfindungsgemäßen Solen, die anderen Verwendungszwecken zugeführt werden sollen, kann der Fachmann anhand seines allgemeinen Fachwissens gegebenenfalls unter Zuhilfenahme einfacher Vorversuche einstellen.

Methodisch gesehen weist die Herstellung des erfindungsgemäßen Sols mit Hilfe des erfindungsgemäßen Verfahrens keine methodischen Besonderheiten auf, sondern wird mit Hilfe üblicher und bekannter Vorrichtungen, wie Rührgefäße, Rohrreaktoren oder Extruder, durchgeführt.

Die erfindungsgemäßen Sole können als Beschichtungsstoffe, Klebstoffe und Dichtungsmassen zur Herstellung von Beschichtungen, Klebschichten und Dichtungen verwendet werden. Außerdem können sie zur Herstellung von Formkörpern, insbesondere optischen Formkörpern, und freitragenden Folien verwendet werden. Generell kommen sie für alle Verwendungszweck in Betracht, wie sie in der deutschen Patentanmeldung DE 198 16 136 A1, Spalte 7, Zeile 40, bis Spalte 8, Zeile 57 beschrieben werden. Vorzugsweise werden sie als Beschichtungsstoffe zur Herstellung von pigmentierten und nicht pigmentierten, insbesondere nicht pigmentierten, Beschichtungen verwendet. Dabei liefern die erfindungsgemäßen Sole vergleichsweise dicke, hochkratzfeste Beschichtungen, die auf den unterschiedlichsten Substraten fest haften.

Insbesondere dienen sie der Herstellung ein- oder mehrschichtiger Klarlackierungen und/oder farb- und/oder effektgebender Mehrschichtlackierungen auf grundierten und ungrundierten Substraten.

Die erfindungsgemäßen Sole erweisen sich gerade bei dieser Verwendung als besonders vorteilhaft. Ganz besondere Vorteile resultieren bei ihrer Verwendung zur Herstellung von Klarlackierungen, insbesondere im Rahmen des sogenannten Nass-in-nass-Verfahrens, bei dem ein Basislack, insbesondere ein Wasserbasislack, auf das grundierte oder ungrundierte Substrat appliziert und getrocknet, indes nicht gehärtet wird, wonach man auf die Basislackschicht einen Klarlack appliziert und die resultierende Klarlackschicht gemeinsam mit der Basislackschicht thermisch und mit aktinischer Strahlung härtet.

Die erfindungsgemäßen Mehrschichtlackierungen können in unterschiedlicher erfindungsgemäßer Weise hergestellt werden.

Eine erste bevorzugte Variante des erfindungsgemäßen Lackierverfahrens umfaßt die Verfahrensschritte:
(I) Herstellen einer Basislackschicht durch Applikation eines Wasserbasislacks auf das Substrat,
(II) Trocknen der Basislackschicht,
(III) Herstellen einer Klarlackschicht durch Applikation des erfindungsgemäßen Sols auf die Basislackschicht und
(IV) gemeinsame Härtung der Basislackschicht und der erfindungsgemäßen Klarlackschicht, wodurch die Basislackierung und die erfindungsgemäße Klarlackierung resultieren (Nass-in-nass-Verfahren).

Diese Variante bietet insbesondere bei der Lackierung von Kunststoffen besondere Vorteile und wird deshalb hier besonders bevorzugt angewandt.

Eine zweite bevorzugte Variante des erfindungsgemäßen Lackierverfahrens umfaßt die Verfahrensschritte:
(I) Herstellen einer Füllerlackschicht durch Applikation eines Füllers auf das Substrat,
(II) Härtung der Füllerlackschicht, wodurch die Füllerlackierung resultiert,
(III) Herstellen einer Basislackschicht durch Applikation eines Wasserbasislacks auf die Füllerlackierung,
(IV) Trocknen der Basislackschicht,
(V) Herstellen der erfindungsgemäßen Klarlackschicht durch Applikation des erfindungsgemäßen Sols auf die Basislackschicht und
(VI) gemeinsame Härtung der Basislackschicht und der erfindungsgemäßen Klarlackschicht, wodurch die Basislackierung und die erfindungsgemäße Klarlackierung resultieren (Nass-in-nass-Verfahren).

Eine dritte bevorzugte Variante des erfindungsgemäßen Lackierverfahrens umfaßt die Verfahrensschritte:
(I) Herstellen einer Füllerlackschicht durch Applikation eines Füllers auf das Substrat,
(II) Trocknung der Füllerlackschicht,
(III) Herstellen einer Basislackschicht durch Applikation eines Wasserbasislacks auf die Füllerlackschicht,
(IV) Trocknen der Basislackschicht,
(V) Herstellen der erfindungsgemäßen Klarlackschicht durch Applikation des erfindungsgemäßen Sols auf die Basislackschicht und
(VI) gemeinsame Härtung der Füllerlackschicht, der Basislackschicht und der erfindungsgemäßen Klarlackschicht, wodurch die Füllerlackierung, die Basislackierung und die erfindungsgemäße Klarlackierung resultieren (erweitertes Nass-in-nass-Verfahren).

Eine vierte bevorzugte Variante des erfindungsgemäßen Lackierverfahrens umfasst die Verfahrensschritte:
(I) Abscheiden einer Elektrotauchackschicht auf dem Substrat,
(II) Trocknen der Elektrotauchlackschicht,
(II) Herstellen einer ersten Basislackschicht durch Applikation eines ersten Basislacks auf der Elektrotauchlackschicht,
(III) gemeinsame Härtung der Elektrotauchlackschicht und der ersten Basislackschicht, wodurch die Elektrotauchlackierung und die erste Basislackierung resultieren (nass-in-nass-Verfahren),
(IV) Herstellen einer zweiten Basislackschicht durch Applikation eines zweiten Basislacks auf die erste Basislackierung,
(V) Trocknen der zweiten Basislackschicht,
(VI) Herstellen der erfindungsgemäßen Klarlackschicht durch Applikation des erfindungsgemäßen Sols auf die Basislackschicht und
(VII) gemeinsame Härtung der zweiten Basislackschicht und der erfindungsgemäßen Klarlackschicht, wodurch die zweite Basislackierung und die erfindungsgemäße Klarlackierung resultieren (nass-in-nass-Verfahren).

Die drei letztgenannten Varianten bieten insbesondere bei der Erstlackierung von Automobilkarosserien besondere Vorteile und werden deshalb hier ganz besonders bevorzugt angewandt.

Es ist ganz besonderer Vorteil der aus dem erfindungsgemäßen Sol hergestellten Beschichtungen, dass sie auch auf bereits ausgehärteten Elektrotauchlackierungen, Füllerlackierungen, Basislackierungen oder üblichen und bekannten Klarlackierungen hervorragend haften, sodass sie sich ausgezeichnet für die Autoreparaturlackierung oder die Kratzfestausrüstung von exponierten Stellen von lackierten Automobilkarosserien eignen.

Als Substrate kommen alle zu lackierenden, zu verklebenden und/oder abzudichtenden Oberflächen, die durch eine Härtung der hierauf befindlichen Schichten unter der kombinierten Anwendung von Hitze und aktinischer Strahlung nicht geschädigt werden, in Betracht.

Geeignete Substrate bestehen aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zementplatten oder Dachziegel, sowie Verbunden dieser Materialien.

Demnach sind die erfindungsgemäßen Sole für das Beschichten, Verkleben und Abdichten von Kraftfahrzeugkarosserien oder Teilen hiervon, von Kraftfahrzeugen im Innen- und Außenbereich, von Bauwerken im Innen- und Außenbereich, von Möbeln, Fenstern und Türen sowie im Rahmen der industriellen Lackierung für das Beschichten, Verkleben und Abdichten von Kleinteilen, wie Muttern, Schrauben, Radkappen oder Felgen, von Coils, Container, Emballagen, elektrotechnischen Bauteilen, wie Motorwicklungen oder Transformatorwicklungen, und von weißer Ware, wie Haushaltsgeräte, Heizkessel und Radiatoren, oder von Glashohlkörpern hervorragend geeignet.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Es können auch grundierte oder ungrundierte Kunststoffteile aus z. B. ABS, AMMA, ASA, CA, CAB, EP, UF, CF, MF, MPF, PF, PAN, PA, PE, HDPE, LDPE, LLDPE, UHMWPE, PC, PC/PBT, PC/PA, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert, geklebt oder abgedichtet werden. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die Applikation der erfindungsgemäßen Sole kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Die Applikationen kann bei Temperaturen von max. 70 bis 80°C durchgeführt werden, so dass geeignete Applikationsviskositäten erreicht werden, ohne dass bei der kurzzeitig einwirkenden thermischen Belastung eine Veränderung oder Schädigungen des erfindungsgemäßen Sols und seines gegebenenfalls wiederaufzubereitenden Overspray eintreten. So kann das Heißspritzen so ausgestaltet sein, dass der Dual-Cure- Beschichtungsstoff nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem erfindungsgemäßen Sol selbst, betrieben wird.

Sofern das erfindungsgemäße Sol Bestandteile enthält, die mit aktinischer Strahlung gehärtet werden können, wird die Applikation bei Beleuchtung mit sichtbarem Licht einer Wellenlänge von über 550 nm oder unter Lichtausschluß durchgeführt. Hierdurch werden eine stoffliche Änderung oder Schädigung des Dual-Cure-Beschichtungsstoffs und des Overspray vermieden.

Im allgemeinen werden die Eletrotauchlackschicht, Füllerlackschicht, Basislackschicht und die erfindungsgemäße Klarlackschicht in einer Nassschichtdicke appliziert, dass nach ihrer Aushärtung Schichten mit der für ihre Funktionen notwendigen und vorteilhaften Schichtdicken resultieren. Im Falle der Elektrotauchlackierung liegt diese Schichtdicke bei 10 bis 70, vorzugsweise 10 bis 60, besonders bevorzugt 15 bis 50 und insbesondere 15 bis 45 µm; im Falle der Füllerlackierung liegt sie bei 10 bis 150, vorzugsweise 10 bis 120, besonders bevorzugt 10 bis 100 und insbesondere 10 bis 90 µm; im Falle der Basislackierung liegt sie bei 5 bis 50, vorzugsweise 5 bis 40, besonders bevorzugt 5 bis 30 und insbesondere 10 bis 25 µm; und im Falle der erfindungsgemäßen Klarlackierungen liegt sie bei 10 bis 100, vorzugsweise 15 bis 80, besonders bevorzugt 20 bis 70 und insbesondere 25 bis 60 µm. Es kann aber auch der aus der europäischen Patentanmeldung EP 0 817 614 A1 bekannte Mehrschichtaufbau aus einer Elektrotauchlackierung, einer ersten Basislackierung, einer zweiten Basislackierung und einer erfindungsgemäßen Klarlackierung angewandt werden, worin die Gesamtschichtdicke der ersten und zweiten Basislackierung bei 15 bis 40 µm liegt und die Schichtdicke der ersten Basislackierung 20 bis 50% der besagten Gesamtschichtdicke beträgt.

Die Aushärtung kann nach einer gewissen Ruhezeit erfolgen. Sie kann eine Dauer von 30 s bis 2 h, vorzugsweise 1 min bis 1 h und insbesondere 1 min bis 30 min haben. Die Ruhezeit dient beispielsweise zum Verlauf und zur Entgasung der applizierten Schichten oder zum Verdunsten von flüchtigen Bestandteilen wie Lösemittel oder Wasser. Die Ruhezeit kann durch die Anwendung erhöhter Temperaturen bis 80°C unterstützt und/oder verkürzt werden, sofern hierbei keine Schädigungen oder Veränderungen der applizierten Schichten eintreten, etwa eine vorzeitige vollständige Vernetzung.

Erfindungsgemäß erfolgt die Aushärtung mit aktinischer Strahlung, insbesondere mit UV-Strahlung, und/oder Elektronenstrahlen. Gegebenenfalls kann sie mit aktinischer Strahlung von anderen Strahlenquellen durchgeführt oder ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der applizierten Schichten gewährleistet werden.

Auch im Falle der Härtung mit UV-Strahlung kann, um die Bildung von Ozon zu vermeiden, unter Inertgas gearbeitet werden. Vorzugsweise wird unter einer sauerstoffabgereicherten Atmosphäre gearbeitet.

Für die Härtung mit aktinischer Strahlung werden die üblichen und bekannten Strahlenquellen und optischen Hilfsmaßnahmen angewandt.

Beispiele geeigneter Strahlenquellen sind Quecksilberhoch- oder - niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden.

Bei kompliziert geformten Werkstücken wie Automobilkarosserien können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern, verbunden mit einer automatischen Bewegungseinrichtung für das Bestrahlen von Hohlräumen oder Kanten, ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben. Weitere Beispiele geeigneter Verfahren und Vorrichtungen zur Härtung mit aktinischer Strahlung werden in der deutschen Patentanmeldung DE 198 18 735 A1, Spalte 10, Zeilen 31 bis 61, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., dass abwechselnd mit UV-Strahlung und Elektronenstrahlung gehärtet wird.

Auch die thermische Härtung weist keine methodischen Besonderheiten auf, sondern erfolgt nach den üblichen und bekannten Methoden wie Erhitzen in einem Umluftofen oder Bestrahlen mit IR-Lampen. Wie bei der Härtung mit aktinischer Strahlung kann auch die thermische Härtung stufenweise erfolgen. Vorteilhafterweise erfolgt die thermische Härtung bei einer Temperatur >90 °C, bevorzugt 90 bis 180 °C, besonders bevorzugt 110 bis 160°C und insbesondere 120 bis 150 °C während einer Zeit von 1 min bis zu 2 h, besonders bevorzugt 2 min bis zu 1 h und insbesondere 3 min bis 30 min.

Thermische Härtung und Härtung mit aktinischer Strahlung können gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für den jeweiligen Einzelfall am vorteilhaftesten ist aufgrund seines allgemeinen Fachwissens gegebenenfalls unter Zuhilfenahme einfacher Vorversuche ermitteln.

Die aus den erfindungsgemäßen Solen hergestellten erfindungsgemäßen Klebschichten und Dichtungen haben auch unter extremen und/oder rasch wechselnden klimatischen Bedingungen eine hervorragende Klebkraft und Dichtungsfähigkeit auch über lange Zeiträume hinweg.

Die aus den erfindungsgemäßen Solen hergestellten erfindungsgemäßen Beschichtungen weisen einen hervorragenden Verlauf und einen hervorragenden optischen Gesamteindruck auf. Sie sind witterungsstabil und vergilben auch im tropischen Klima nicht. Sie sind daher im Innen- und Außenbereich verwendbar.

Die mit Hilfe der erfindungsgemäßen Sole hergestellten farb- und/oder effektgebenden Mehrschichtlackierungen sind, was Farbe, Effekt, Glanz und D.O.I. (distinctiveness of the reflected image) betrifft, von höchster optischer Qualität, haben eine glatte, strukturfreie, harte, flexible und hochkratzfeste Oberfläche, sind witterungs-, chemikalien- und etchbeständig, sie vergilben nicht und zeigen keine Rißbildung und Delamination der Schichten.

Die erfindungsgemäßen Beschichtungen können daher in hervorragender Weise die Kratz- und Abriebfestigkeit und der Korrosionsbeständigkeit erhöhen, das Reinigungsverhalten und die Entformung verbessern, die Anhaftung verringern, einen Antibeschlageffekt und Antireflexeigenschaften erzeugen und/oder den Berstdruck erhöhen.

Daher weisen auch die erfindungsgemäßen grundierten und ungrundierten Substrate, insbesondere Karosserien von Automobilen und Nutzfahrzeugen, industrielle Bauteile, inklusive Kunststoffteile, Kleinteile, Emballagen, Coils, weiße Ware und elektrische Bauteile, oder Möbel, Türen, Fenster oder Glashohlkörper, die mit mindestens einer erfindungsgemäßen Beschichtung beschichtet, mit mindestens einer erfindungsgemäßen Dichtung abgedichtet und/oder mit mindestens einem erfindungsgemäßen Klebstoff verklebt sind, besondere technische und wirtschaftliche Vorteile, insbesondere eine lange Gebrauchsdauer, auf, was sie für die Anwender besonders attraktiv macht.

### Beispiele

### Beispiele 1 und 2

### Die Herstellung der erfindungsgemäßen Sole 1 und 2

Für die Beispiele 1 und 2 wurden in einem geeigneten Rührgefäß Aluminium-tri-sec.-butylat und Methyltriethoxysilan vorgelegt und mit einer äquimolaren Menge, bezogen auf Aluminium-tri-sec.-butylat, versetzt. Die Zugabe erfolgte in der Weise, dass die Temperatur des Reaktionsgemischs 30 °C nicht überstieg. Anschließend wurden ein handelsübliches Aminoplastharz (Resimene^{®} BM 9539) und gegebenenfalls noch 3-Glycidyloxypropyltrimethoxysilan hinzugegeben und während zehn Minuten eingerührt. Anschließend wurde Wasser so hinzugegeben, dass die Temperatur nicht über 30 °C stieg. Das resultierende Reaktionsgemisch wurde solange bei Raumtemperatur gerührt, bis es homogen war.

Zu dem Reaktionsgemisch wurde 3-O-Carbamatopropyl-trimethoxysilan zugegeben. Anschließend wurde das Reaktionsgemisch so mit weiterem Wasser versetzt, dass die Temperatur nicht über 30 °C stieg. Das resultierende erfindungsgemäße Sol wurde während 24 Stunden bei Raumtemperatur gerührt.

Die Ausgangsprodukte und ihre Mengen finden sich in der Tabelle 1.

**Tabelle 1: Die Ausgangsprodukte für die erfindungsgemäßen Sole 1 und 2 ihre Mengen**

| **Ausgangsprodukt** | **Beispiele:** | | | |
|---|---|---|---|---|
| | **1** | | **2** | |
| | **Mol** | **Gew.-%** | **Mol** | **Gew.-%** |
| Stufe (1): | | | | |
| Aluminiumtri-Sec.-Butylat | 0,2 | 11,1 | 0,2 | 10,8 |
| Methyltriethoxy-silan | 0,5 | 20,2 | 0,3 | 11,8 |
| Acetessigsäureester | 0,2 | 5,9 | 0,2 | 5,7 |
| Aminoplastharz | - | 35,5 | - | 34,6 |
| 3-Glycidyloxypropyltrimethoxysilan | - | - | 0,2 | 10,4 |
| Wasser | 2,1 | 8,5 | 2,1 | 8,3 |
| Stufe (2): | | | | |
| 3-O-Carbamatopropyltrimethoxysilan | 0,3 | 15,1 | 0,3 | 14,8 |
| Wasser | 0,9 | 3,7 | 0,9 | 3,6 |
| Summe der Ausgangsprodukte der Stufen (1) und (2): | 4,2 | 100 | 4,2 | 100 |
| Festkörpergehalt (15 Minuten/180 °C) (Gew.-%) | - | 46,2 | - | 47,4 |

Die erfindungsgemäßen Sole der Beispiele 1 und 2 waren hervorragend für die Herstellung von dicken, hochkratzfesten Beschichtungen für die unterschiedlichsten Substrate geeignet. Trotz ihrer Herstellung bei Raumtemperatur waren sie ausgesprochen lagerstabil, ohne dass sie gekühlt werden mussten. Dies war logistisch, apparativ, verfahrenstechnisch und sicherheitstechnisch besonders vorteilhaft. Außerdem kam es bei ihrer Herstellung nicht zu eine Entmischung und zur Bildung zweier Phasen.

### Beispiele 3 bis 6

### Die Herstellung erfindungsgemäßer Klarlacke und erfindungsgemäßer Mehrschichtlackierungen hieraus

Für die Herstellung der erfindungsgemäßen Klarlacke der Beispiele 3 bis 6 wurden die erfindungsgemäßen Sole mit lacktypische Zusatzstoffen versetzt. Die Tabellen 2 gibt einen Überblick über die stoffliche Zusammensetzung.

**Tabelle 2: Die stoffliche Zusammensetzung (in Gew.-%) der erfindungsgemäßen Klarlacke der Beispiele 3 bis 6**

| **Bestandteil** | **Beispiele:** | | | |
|---|---|---|---|---|
| | **3** | **4** | **5** | **6** |
| Sol gemäß Beispiel 1 | 80,75 | 93,6 | - | - |
| Sol gemäß Beispiel 2 | - | - | 81,15 | 93,75 |
| Vernetzungsmittel^{a)} | 13,75 | - | 13,45 | - |
| Handelsübliches Lackadditiv^{b)} | 0,25 | 0,3 | 0,25 | 0,3 |
| Handelsübliches Lackadditiv^{c)} | 0,25 | 0,3 | 0,25 | 0,3 |
| Vernetzungskatalysator^{d)} | 5,0 | 5,8 | 4,9 | 5,65 |

| | | | | |
|---|---|---|---|---|
| a) mit Diethylmalonat und Acetessigsäureethylester blockiertes trimeres Hexamethylendiisocyanat; b) Byk^{®} 390 der Firma Byk Chemie; c) Byk^{®} 310 der Firma Byk Chemie; d) Nacure^{®} 5528 der Firma King Industries; | | | | |

Die Klarlacke der Beispiele 3 bis 6 wurden mit Butylacetat auf eine Viskosität von 18 Sekunden im DIN A4-Auslaufbecher eingestellt und gesiebt (Maschenweite 31 µm). Sie wurden zur Herstellung von Klarlackierungen in farbgebenden Mehrschichtlackierungen verwendet.

Zur Herstellung der Mehrschichtlackierungen wurden Prüftafeln aus Stahl, die mit Elektrotauchlackierungen einer Trockenschichtdicke von 18 bis 22 µm beschichtet waren, mit einem Wasserfüller beschichtet. Die resultierenden Wasserfüllerschichten wurde während 20 Minuten bei 165°C eingebrannt, so dass Füllerlackierungen einer Trockenschichtdicke von 35 bis 40 µm resultierten. Die Füllerlackierungen wurden anschließend mit einem schwarzen Wasserbasislack in einer Schichtdicke von 12 bis 15 µm beschichtet, und die resultierenden Wasserbasislackschichten wurden während 10 Minuten bei 80°C abgelüftet. Hiernach wurden die Klarlacke der Beispiel 3 und 4 nass-in-nass in einem Kreuzgang mit einer Fließbecherpistole pneumatisch appliziert. Die Klarlackschichten wurden während 5 Minuten bei Raumtemperatur abgelüftet.

Anschließend wurden die Wasserbasislackschichten und die Klarlackschichten während 20 Minuten bei 140°C in einem Umluftofen thermisch gehärtet.

Die erfindungsgemäßen Mehrschichtlackierungen wurden wie folgt getestet:

Glanz und Haze der Mehrschichtlackierungen wurden nach DIN 67530 bestimmt.

Die Zwischenschichthaftung wurde mit Hilfe der Gitterschnittprüfung nach DIN ISO 2409; 1994-10 bestimmt.

Die Mikroeindringhärte wurde als Universalhärte bei 25,6 mN mit einem Fischersope 100 V mit Diamantpyramide nach Vickers gemessen.

Die Kratzfestigkeit wurde mit Hilfe des Stahlwolle-Tests bestimmt. Dazu wurde die flache Seite eines Schlosserhammers nach DIN 1041 mit einer Lage Stahlwolle bespannt. Dann wurde der Hammer vorsichtig im rechten Winkel auf die Klarlackierungen aufgesetzt und ohne zu verkanten und ohne zusätzliche Körperkraft in einer Spur über die Klarlackierungen geführt. Es mußten bei jeder Prüfung 10 Doppelhübe während 15 Sekunden durchgeführt werden. Das Schädigungsbild wurde wie folgt benotet:

### Note Schädigungsbild

1 keine Kratzer
2 geringe Anzahl an Kratzern
3 mäßige Anzahl an Kratzern
4 mittelstarke Anzahl an Kratzern
5 große Anzahl an Kratzern
6 sehr viele Kratzer

Außerdem wurde das Schädigungsbild nach 200 Doppelhüben ermittelt und die Tiefe der Kratzer qualitativ bestimmt.

Die in dieser Weise ermittelten anwendungstechnischen Eigenschaften sind in der Tabelle 3 zusammengestellt.

**Tabelle 3: Wichtige anwendungstechnische Eigenschaften der Mehrschichtlackierungen der Beispiele 3 bis 6**

| **Eigenschaft** | **Beispiele:** | | | |
|---|---|---|---|---|
| | **3** | **4** | **5** | **6** |
| Glanz (Einheiten): | 89 | 90 | 88 | 92 |
| Haze (Einheiten): | 22 | 18 | 15 | 13 |
| Gitterschnittprüfung (Note): | GT1 | GT1 | GT1 | |
| | GT1 | | | |
| Mikroeindringhärte (mN): | 185,7 | 196,2 | 149,8 | |
| | 154,1 | | | |
| Kratzfestigkeit gegenüber Stahlwolle: | | | | |
| (10 Doppelhübe) (Note): | 2 | 2 | 3 | 3 |
| (200 Doppelhübe) (Note): | 4 | 2 | 4 | 4 |
| Tiefe der Kratzer nach 200 Doppelhüben (qualitativ): | o. | o. | o. | o. |

| | | | | |
|---|---|---|---|---|
| o. oberflächlich | | | | |

Die in der Tabelle 3 zusammengestellten Ergebnisse zeigen, dass die erfindungsgemäßen Mehrschichtlackierungen einen hohen Glanz, einen geringen Haze, eine sehr gute Zwischenschichthaftung, eine sehr gute Härte und eine besonders hohe Kratzfestigkeit aufwiesen.

## Patentansprüche

1. Polysiloxan-Sole, herstellbar durch Hydrolyse und Kondensation von mindestens zwei hydrolysierbaren Siliziumverbindungen, wobei man
(1) in einer ersten Stufe
(A) mindestens eine carbamatgruppenfreie Siliziumverbindung der allgemeinen Formel I:
(ZₒL-)ₘSi(H)ₙ(R)ₚ (I),
worin die Indizes in die Variablen die folgende Bedeutung haben:
o eine ganze Zahl von 1 bis 5;
m 0, 1, 2 oder 3;
n eine ganze Zahl von 1 bis 4;
p 0, 1, 2 oder 3;
Z reaktive funktionelle Gruppe, ausgenommen Carbamatgruppe;
L mindestens zweibindige, verküpfende, organische Gruppe;
H hydrolysierbare, einbindige, organische Gruppe oder hydrolysierbares Atom;
R nicht hydrolysierbare, einbindige, organische Gruppe;
in der Gegenwart
(B) mindestens eines Vernetzungsmittels partiell hydrolysiert und kondensiert, wonach man
(2) in mindestens einer weiteren Stufe das in der Stufe (1) erhaltene Reaktionsgemisch (1) mit
(C) mindestens einer hydrolysierbaren, carbamatfunktionellen Siliziumverbindung der allgemeinen Formel II:
{[HR¹N-(O)C-O-]ᵣL-}ₛSi(H)ₜ(R)ᵤ (II),
worin die Variablen L, H und R die vorstehend angegebene Bedeutung und die Variable R¹ und die Indizes die folgende Bedeutung haben:
R¹ Wasserstoffatom oder Gruppe R;
r eine ganze Zahl von 1 bis 5;
s 1, 2 oder 3;
t 1, 2 oder 3;
u 0, 1 oder 2;
vollständig hydrolysiert und kondensiert.

2. Polysiloxan-Sole nach Anspruch 1, **dadurch gekennzeichnet, dass** sie herstellbar sind, indem man in der ersten Stufe (1) die Siliziumverbindung (A) in der Gegenwart
(D) mindestens einer hydrolysierbaren Metallverbindung der allgemeinen Formel III:
HᵥMR_{w-v} (III),
worin die Variablen H und R die vorstehend angegebene Bedeutung und die Variable M und die Indizes v und w die folgende Bedeutung haben:
v und
w eine ganze Zahl zwischen 1 und 4, mit der Maßgabe, dass v + w = 2, 3 oder 4;
M Zinn, Bor, Aluminium, Titan oder Zirkonium;
partiell hydrolysiert und kondensiert.

3. Polysiloxan-Sole nach Anspruch 1 oder 2, **dadurch gekennzeichnet, dass** sie herstellbar sind, indem man in der ersten Stufe (1) die Siliziumverbindung (A) in der Gegenwart
(E) mindestens einer organischen Thioverbindung der allgemeinen Formel IV:
S(-LYₒ)₂ (IV),
worin der Index o und die Variable L die vorstehend angegebene Bedeutung haben und die Variable Y für eine Hydroxylgruppe oder eine primäre oder sekundäre Aminogruppe steht;
partiell hydrolysiert und kondensiert.

4. Polysiloxan-Sole nach einem der Ansprüche 1 bis 3, **dadurch gekennzeichnet, dass** sie durch Hydrolyse, Kondensation und Komplexierung herstellbar sind.

5. Polysiloxan-Sole nach Anspruch 4, **dadurch gekennzeichnet, dass** sie durch Komplexierung in der ersten Stufe (1) herstellbar sind.

6. Polysiloxan-Sole nach Anspruch 4 oder 5, **dadurch gekennzeichnet, dass** die Komplexierungsmittel (F) aus der Gruppe der organischen Verbindungen, die Chelatliganden bilden, ausgewählt werden.

7. Dual-Cure-Polysiloxan-Sole nach einem der Ansprüche 1 bis 6, **dadurch gekennzeichnet, dass** die reaktiven funktionellen Gruppen Z aus der Gruppe, bestehend aus
(Z 1) reaktiven funktionellen Gruppen, die mindestens eine mit aktinischer Strahlung aktivierbare Bindung enthalten, und
(Z 2) reaktiven funktionellen Gruppen, die mit Gruppen ihrer Art ("mit sich selbst") und/oder mit komplementären reaktiven funktionellen Gruppen thermisch initiierte Reaktionen eingehen,
ausgewählt werden.

8. Polysiloxan-Sole nach Anspruch 7, **dadurch gekennzeichnet, dass** die mit aktinischer Strahlung aktivierbaren Bindungen Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder - Doppelbindungen sind.

9. Polysiloxan-Sole nach Anspruch 8, **dadurch gekennzeichnet, dass** die mit aktinischer Strahlung aktivierbaren Bindungen Kohlenstoff-Kohlenstoff-Doppelbindungen ("Doppelbindungen") sind.

10. Polysiloxan-Sole nach Anspruch 9, **dadurch gekennzeichnet, dass** die Doppelbindungen enthaltenden Gruppen (Z 1) aus der Gruppe, bestehend aus (Meth)Acrylat-, Ethacrylat-, Crotonat-, Cinnamat-, Vinylether-, Vinylester-, Dicyclopentadienyl-, Norbornenyl-, Isoprenyl-, Isoprenyl-, Isopropenyl-, Allyl- oder Butenylgruppen; Dicyclopentadienyl-, Norbornenyl-, Isoprenyl-, Isopropenyl-, Allyl-oder Butenylethergruppen oder Dicyclopentadienyl-, Norbornenyl-, Isoprenyl-, Isopropenyl-, Allyl- oder Butenylestergruppen, ausgewählt werden.

11. Polysiloxan-Sole nach einem der Ansprüche 7 bis 10, **dadurch gekennzeichnet, dass** die reaktiven funktionellen Gruppen (Z 2) aus der Gruppe, bestehend aus blockierten Isocyanatgruppen, Harnstoffgruppen, Epoxidgruppen, Gruppen -CH₂OR, Carboxylgruppen und Anhydridgruppen, ausgewählt werden.

12. Polysiloxan-Sole nach einem der Ansprüche 1 bis 11, **dadurch gekennzeichnet, dass** die hydrolysierbaren, einbindigen organischen Gruppen H aus der Gruppe, bestehend aus Resten der allgemeinen Formel V:
-X-R (V),
worin die Variable R die vorstehend angegebene Bedeutung hat und die Variable X für ein Sauerstoffatom, ein Schwefelatom, eine Oxycarbonylgruppe oder eine Gruppe >NR² (mit R² = Wasserstoffatom oder Alkylgruppe mit 1 bis 4 Kohlenstoffatomen) steht; und die hydrolysierbaren Atome H aus der Gruppe, bestehend aus Wasserstoffatomen und Halogenatomen, ausgewählt werden.

13. Polysiloxan-Sole nach Anspruch 12, **dadurch gekennzeichnet, dass** die hydrolysierbaren, einbindigen organischen Gruppen H aus der Gruppe der Alkoxygruppen mit 1 bis 4 Kohlenstoffatomen im Alkylrest ausgewählt werden.

14. Polysiloxan-Sole nach einem der Ansprüche 1 bis 13, **dadurch gekennzeichnet, dass** die mindestens zweibindigen, verküpfenden, organischen Gruppen L aus der Gruppe, bestehend aus mindestens zweibindigen, aliphatischen, aromatischen, cycloaliphatischen und aromatisch-cycloaliphatischen sowie Heteroatome enthaltenden aliphatischen, aromatischen, cycloaliphatischen und aromatisch-cycloaliphatischen Kohlenwasserstoffresten, ausgewählt werden.

15. Polysiloxan-Sole nach einem der Ansprüche 1 bis 14, **dadurch gekennzeichnet, dass** die nicht hydrolysierbaren, einbindigen organischen Gruppen R aus der Gruppe, bestehend aus einbindigen Gruppen, die sich von mindestens einer der folgenden organischen Verbindungen ableiten:
(i) Substituierte und unsubstituierte, kein oder mindestens ein Heteroatom in der Kette und/oder im Ring enthaltende, lineare oder verzweigte Alkane, Alkene, Cycloalkane, Cycloalkene, Alkylcycloalkane, Alkylcycloalkene, Alkenylcycloalkane oder Alkenylcycloalkene;
(ii) substituierte und unsubstituierte Aromaten oder Heteroamaten; sowie
(iii) Alkyl-, Alkenyl-, Cycloalkyl-, Cycloalkenyl-, Alkylcyloalkyl-, Alkylcycloalkenyl-, Alkenylcycloalkyl- oder Alkenylcycloalkenyl-substitiuierte Aromaten oder Heteroaromaten, deren Substituenten substituiert oder unsubstituiert sind und kein oder mindestens ein Heteroatom in ihrer Kette und/oder ihrem Ring enthalten;
ausgewählt werden.

16. Polysiloxan-Sole nach einem der Ansprüche 1 bis 15, **dadurch gekennzeichnet, dass** der Index m = 0 und die Indizes n und p = 1 bis 3.

17. Polysiloxan-Sole nach einem der Ansprüche 1 bis 16, **dadurch gekennzeichnet, dass** die Variable R¹ für ein Wasserstoffatom steht.

18. Polysiloxan-Sole nach einem der Ansprüche 1 bis 17, **dadurch gekennzeichnet, dass** die Indizes r und s = 1, der Index t = 3 und der Index u = 0.

19. Polysiloxan-Sole nach einem der Ansprüche 1 bis 19, **dadurch gekennzeichnet, dass** die Vernetzungsmittel (B) aus der Gruppe, bestehend aus blockierten Polyisocyanaten, Tris(alkoxycarbonylamino)triazinen, Polyepoxiden, Aminoplastharzen oder Polyanhydriden, ausgewählt werden.

20. Polysiloxan-Sole nach Anspruch 19, **dadurch gekennzeichnet, dass** die Vernetzungsmittel (B) Aminoplastharze sind.

21. Verfahren zur Herstellung von Polysiloxan-Solen gemäß einem der Ansprüche 1 bis 20 durch Hydrolyse und Kondensation von mindestens zwei hydrolysierbaren Siliziumverbindungen, **dadurch gekennzeichnet, dass** man
(1) in einer ersten Stufe
(A) mindestens eine carbamatgruppenfreie Siliziumverbindung der allgemeinen Formel I:
(ZₒL-)ₘSi(H)ₙ{R)ₚ (I),
worin die Indizes in die Variablen die folgende Bedeutung haben:
o eine ganze Zahl von 1 bis 5;
m 0, 1, 2 oder 3;
n eine ganze Zahl von 1 bis 4;
p 0, 1, 2 oder 3;
Z reaktive funktionelle Gruppe, ausgenommen Carbamatgruppe;
L mindestens zweibindige, verküpfende, organische Gruppe;
H hydrolysierbare, einbindige, organische Gruppe oder hydrolysierbares Atom;
R nicht hydrolysierbare, einbindige, organische Gruppe;
in der Gegenwart
(B) mindestens eines Vernetzungsmittels partiell hydrolysiert und kondensiert, wonach man
(2) in mindestens einer weiteren Stufe das in der Stufe (1) erhaltene Reaktionsgemisch (1) mit
(C) mindestens einer hydrolysierbaren, carbamatfunktionellen Siliziumverbindung der allgemeinen Formel II:
{[HR¹N-(O)C-O-]ᵣL-}ₛSi(H)ₜ(R)ᵤ (II)
worin die Variablen L, H und R die vorstehend angegebene Bedeutung und die Variable R¹ und die Indizes die folgende Bedeutung haben:
R¹ Wasserstoffatom oder Gruppe R;
r eine ganze Zahl von 1 bis 5;
s 1, 2 oder 3;
t 1, 2 oder 3;
u 0, 1 oder 2;
vollständig hydrolysiert und kondensiert.

22. Verwendung der Polysiloxan-Sole gemäß einem der Ansprüche 1 bis 20 oder der gemäß Anspruch 21 hergestellten Polysiloxan-Sole als Beschichtungsstoffe, Klebstoffe und Dichtungsmassen sowie zur Herstellung von Formkörpern und freitragenden Folien sowie als Bestandteil von Beschichtungsstoffen, Klebstoffen und Dichtungsmassen.

## Claims

1. Polysiloxane sols preparable by hydrolysis and condensation of at least two hydrolyzable silicon compounds, by subjecting
(1) in a first stage
(A) at least one silicon compound of the general formula I:
(ZₒL-)ₘSi(H)ₙ(R)ₚ (I),
which is free of carbamate groups and in which the indices and the variables have the following meanings:
o is an integer from 1 to 5;
m is 0, 1, 2 or 3;
n is an integer from 1 to 4;
p is 0, 1, 2 or 3;
Z is a reactive functional group, excluding carbamate group;
L is an at least divalent, linking, organic group;
H is a hydrolyzable, monovalent, organic group or hydrolyzable atom;
R is a nonhydrolyzable, monovalent, organic group;
to partial hydrolysis and condensation in the presence
(B) of at least one crosslinking agent, and then subjecting
(2) in at least one further stage, the reaction mixture (1) obtained in stage (1) to complete hydrolysis and condensation with
(C) at least one hydrolyzable, carbamate-functional silicon compound of the general formula II:
{[HR¹N-(O)C-O-]ᵣL-}ₛSi(H)ₜ(R)ᵤ (II)
in which the variables L, H, and R are as defined above and the variable R¹ and the indices have the following meanings:
R¹ is a hydrogen atom or group R;
r is an integer from 1 to 5;
s is 1, 2 or 3;
t is 1, 2 or 3;
u 0, 1 or 2.

2. Polysiloxane sols according to Claim 1, **characterized in that** they are preparable by subjecting in the first stage (1) the silicon compound (A) to partial hydrolysis and condensation in the presence
(D) of at least one hydrolyzable metal compound of the general formula III:
HᵥMR_{w-v} (III)
in which the variables H and R are as defined above and the variable M and the indices v and w have the following meanings:
v and
w are an integer between 1 and 4 with the proviso that the v + w = 2, 3 or 4; and
M is tin, boron, aluminum, titanium or zirconium.

3. Polysiloxane sols according to Claim 1 or 2, **characterized in that** they are preparable by subjecting in the first stage (1) the silicon compound (A) to partial hydrolysis and condensation in the presence
(E) of at least one organic thio compound of the general formula IV
S(-LYₒ)₂ (IV)
in which the index o and the variable L are as defined above and the variable Y stands for a hydroxyl group or a primary or secondary amino group.

4. Polysiloxane sols according to any of Claims 1 to 3, **characterized in that** they are preparable by hydrolysis, condensation, and complexation.

5. Polysiloxane sols according to Claim 4, **characterized in that** they are preparable by complexation in the first stage (1).

6. Polysiloxane sols according to Claim 4 or 5, **characterized in that** the complexing agents (F) are selected from the group consisting of organic compounds which form chelate ligands.

7. Dual-cure polysiloxane sols according to any of Claims 1 to 6, **characterized in that** the reactive functional groups Z are selected from the group consisting of
(Z1) reactive functional groups containing at least one bond which can be activated with actinic radiation, and
(Z2) reactive functional groups which undergo thermally initiated reactions with groups of their kind ("with themselves") and/or with complementary reactive functional groups.

8. Polysiloxane sols according to Claim 7, **characterized in that** the bonds which can be activated with actinic radiation are carbon-hydrogen single bonds or carbon-carbon, carbon-oxygen, carbon-nitrogen, carbon-phosphorus or carbon-silicon single bonds or double bonds.

9. Polysiloxane sols according to Claim 8, **characterized in that** the bonds which can be activated with actinic radiation are carbon-carbon double bonds ("double bonds").

10. Polysiloxane sols according to Claim 9, **characterized in that** the groups (Z1) containing double bonds are selected from the group consisting of (meth)acrylate, ethacrylate, crotonate, cinnamate, vinyl ether, vinyl ester, dicyclopentadienyl, norbornenyl, isoprenyl, isopropenyl, allyl or butenyl groups; dicyclopentadienyl ether, norbornenyl ether, isoprenyl ether, isopropenyl ether, allyl ether or butenyl ether groups; or dicyclopentadienyl ester, norbornenyl ester, isoprenyl ester, isopropenyl ester, allyl ester or butenyl ester groups.

11. Polysiloxane sols according to any of Claims 7 to 10, **characterized in that** the reactive functional groups (Z2) are selected from the group consisting of blocked isocyanate groups, urea groups, epoxide groups, groups -CH₂OR, carboxyl groups, and anhydride groups.

12. Polysiloxane sols according to any of Claims 1 to 11, **characterized in that** the hydrolyzable, monovalent, organic groups H are selected from the group consisting of radicals of the general formula V
-X-R (V)
in which the variable R is as defined above and the variable X stands for an oxygen atom, a sulfur atom, an oxycarbonyl group or a group >NR², (where R² = hydrogen atom or alkyl group having from 1 to 4 carbon atoms); and the hydrolyzable atoms H are selected from the group consisting of hydrogen atoms and halogen atoms.

13. Polysiloxane sols according to Claim 12, **characterized in that** the hydrolyzable, monovalent, organic groups H are selected from the group consisting of alkoxy groups having from 1 to 4 carbon atoms in the alkyl radical.

14. Polysiloxane sols according to any of Claims 1 to 13, **characterized in that** the at least divalent, linking organic groups L are selected from the group consisting of at least divalent, aliphatic, aromatic, cycloaliphatic, and aromatic-cycloaliphatic, and also heteroatom-containing aliphatic, aromatic, cycloaliphatic, and aromatic-cycloaliphatic, hydrocarbon radicals.

15. Polysiloxane sols according to any of Claims 1 to 14, **characterized in that** the nonhydrolyzable, monovalent, organic groups R are selected from the group consisting of monovalent groups which derive from at least one of the following organic compounds:
(i) substituted and unsubstituted, linear or branched alkanes, alkenes, cycloalkanes, cycloalkenes, alkylcycloalkanes, alkylcycloalkenes, alkenylcycloalkanes or alkenylcycloalkenes which contain no heteroatom or at least one heteroatom in the chain and/or in the ring;
(ii) substituted and unsubstituted aromatics or heteroaromatics; and
(iii) alkyl-, alkenyl-, cycloalkyl-, cycloalkenyl-, alkylcycloalkyl-, alkylcycloalkenyl-, alkenylcycloalkyl- or alkenylcycloalkenyl-substituted aromatics or heteroaromatics whose substituents are substituted or unsubstituted and which contain no heteroatom or at least one heteroatom in their chain and/or their ring.

16. Polysiloxane sols according to any of Claims 1 to 15, **characterized in that** the index m = 0 and the indices n and p = from 1 to 3.

17. Polysiloxane sols according to any of Claims 1 to 16, **characterized in that** the variable R¹ stands for a hydrogen atom.

18. Polysiloxane sols according to any of Claims 1 to 17, **characterized in that** the indices r and s = 1, the index t = 3, and the index u = 0.

19. Polysiloxane sols according to any of Claims 1 to 18, **characterized in that** the crosslinking agents (B) are selected from the group consisting of blocked polyisocyanates, tris(alkoxycarbonylamino)triazines, polyepoxides, amino resins, and polyanhydrides.

20. Polysiloxane sols according to Claim 19, **characterized in that** the crosslinking agents (B) are amino resins.

21. Process for preparing polysiloxane sols according to any of Claims 1 to 20 by hydrolysis and condensation of at least two hydrolyzable silicon compounds, **characterized in that** it comprises subjecting
(1) in a first stage
(A) at least one silicon compound of the general formula I:
(ZₒL-)ₘSi (H)ₙ(R)ₚ (I),
which is free of carbamate groups and in which the indices and the variables have the following meanings:
o is an integer from 1 to 5;
m is 0, 1, 2 or 3;
n is an integer from 1 to 4;
p is 0, 1, 2 or 3;
Z is a reactive functional group, excluding carbamate group;
L is an at least divalent, linking, organic group;
H is a hydrolyzable, monovalent, organic group or hydrolyzable atom;
R is a nonhydrolyzable, monovalent, organic group;
to partial hydrolysis and condensation in the presence
(B) of at least one crosslinking agent, and then subjecting
(2) in at least one further stage, the reaction mixture (1) obtained in stage (1) to complete hydrolysis and condensation with
(C) at least one hydrolyzable, carbamate-functional silicon compound of the general formula II:
{[HR¹N-(O)C-O-]ᵣL-}ₛSi(H)ₜ(R)ᵤ (II)
in which the variables L, H, and R are as defined above and the variable R¹ and the indices have the following meanings:
R¹ is a hydrogen atom or group R;
r is an integer from 1 to 5;
s is 1, 2 or 3;
t is 1, 2 or 3;
u 0, 1 or 2.

22. Use of the polysiloxane sols according to any of Claims 1 to 20 or the polysiloxane sols prepared according to Claim 21 as coating materials, adhesives and sealing compounds and for producing moldings and self-supporting films, and as a constituent of coating materials, adhesives and sealing compounds.

## Revendications

1. Sols de polysiloxane pouvant être fabriqués par hydrolyse et condensation d'au moins deux composés de silicium hydrolysables, dans lesquels on hydrolyse partiellement et on condense :
(1) dans une première étape :
(A) au moins un composé de silicium exempt de groupements carbamate, de formule générale I :
(ZₒL-)ₘSi(H)ₙ(R)ₚ (I),
dans laquelle les indices dans les variables ont la signification suivante :
o est un nombre entier de 1 à 5 ;
m est égal à 0, 1, 2 ou 3 ;
n est un nombre entier de 1 à 4 ;
p est égal à 0, 1, 2 ou 3 ;
Z est un groupement fonctionnel réactif, à l'exception d'un groupement carbamate ;
L est un groupement organique liant au moins divalent ;
H est un groupement organique monovalent hydrolysable ou un atome hydrolysable ;
R est un groupement organique monovalent non hydrolysable ;
en présence
(B) d'au moins un agent de réticulation, puis
(2) dans au moins une autre étape, on hydrolyse complètement et on condense le mélange réactionnel (1) obtenu à l'étape (1) avec :
(C) au moins un composé de silicium à fonction carbamate hydrolysable, de formule générale II :
{[HR¹N-(O)C-O-]ᵣL-}ₛSi(H)ₜ(R)ᵤ (II),
dans laquelle les variables L, H et R ont la signification indiquée précédemment et la variable R¹ et les indices ont la signification suivante :
R¹ représente un atome d'hydrogène ou un groupement R ;
r est un nombre entier de 1 à 5 ;
s est égal à 1, 2 ou 3 ;
t est égal à 1, 2 ou 3 ;
u est égal à 0, 1 ou 2.

2. Sols de polysiloxane selon la revendication 1, **caractérisés en ce que** l'on peut les fabriquer en hydrolysant partiellement et en condensant, dans la première étape (1), le composé de silicium (A) en présence :
(D) d'au moins un composé de métal hydrolysable de formule générale III :
HᵥMR_{w-v} (III),
dans laquelle les variables H et R ont la signification indiquée précédemment et la variable M et les indices v et w ont la signification suivante :
v et
w sont un nombre entier compris entre 1 et 4, à condition que v + w = 2, 3 ou 4 ;
M représente l'étain, le bore, l'aluminium, le titane ou le zirconium.

3. Sols de polysiloxane selon la revendication 1 ou 2, **caractérisés en ce que** l'on peut les fabriquer en hydrolysant partiellement et en condensant, dans la première étape (1), le composé de silicium (A) en présence :
(E) d'au moins un composé thio organique de formule générale IV :
S(-LYₒ)₂ (IV),
dans laquelle l'indice o et la variable L ont la signification indiquée précédemment et la variable Y représente un groupement hydroxyle ou un groupement amino primaire ou secondaire.

4. Sols de polysiloxane selon l'une quelconque des revendications 1 à 3, **caractérisés en ce que** l'on peut les fabriquer par hydrolyse, condensation et complexation.

5. Sols de polysiloxane selon la revendication 4, **caractérisés en ce que** l'on peut les fabriquer par complexation à la première étape (1).

6. Sols de polysiloxane selon la revendication 4 ou 5, **caractérisés en ce que** l'on choisit les agents complexants (F) dans le groupe des composés organiques qui forment des ligands chélateurs.

7. Sols de polysiloxane à double durcissement selon l'une quelconque des revendications 1 à 6, **caractérisés en ce que** l'on choisit les groupements fonctionnels réactifs Z dans le groupe constitué :
(Z1) de groupements fonctionnels réactifs qui contiennent au moins une liaison activable par un rayonnement actinique, et
(Z2) de groupements fonctionnels réactifs, qui s'engagent dans des réactions initiées thermiquement avec des groupements de leur type ("avec eux-mêmes") et/ou avec des groupements fonctionnels réactifs complémentaires.

8. Sols de polysiloxane selon la revendication 7, **caractérisés en ce que** les liaisons activables par rayonnement actinique sont des simples liaisons de type carbone-hydrogène ou des simples liaisons et/ou des doubles liaisons de types carbone-carbone, carbone-oxygène, carbone-azote, carbone-phosphore ou carbone-silicium.

9. Sols de polysiloxane selon la revendication 8, **caractérisés en ce que** les liaisons activables par rayonnement actinique sont des doubles liaisons de type carbone-carbone ("doubles liaisons").

10. Sols de polysiloxane selon la revendication 9, **caractérisés en ce que** l'on choisit les groupements contenant des doubles liaisons (Z 1) dans le groupe constitué des groupements (méth)acrylate, éthacrylate, crotonate, cinnamate, vinyléther, vinylester, dicyclopentadiényle, norbornényle, isoprényle, isoprényle, isopropényle, allyle ou butényle ; de groupements dicyclopentadiényléther, norbornényléther, isoprényléther, isopropényléther, allyléther ou butényléther ou de groupements dicyclo-pentadiénylester, norbornénylester, isoprényl-ester, isopropénylester, allylester ou butényl-ester.

11. Sols de polysiloxane selon l'une quelconque des revendications 7 à 10, **caractérisés en ce que** l'on choisit les groupements fonctionnels réactifs (Z2) dans le groupe constitué de groupements de types isocyanate bloqué, urée, époxyde, -CH₂OR, carboxyle et anhydride.

12. Sols de polysiloxane selon l'une quelconque des revendications 1 à 11, **caractérisés en ce que** l'on choisit les groupements organiques monovalents hydrolysables H dans le groupe constitué des radicaux de formule générale V :
-X-R (V),
dans laquelle la variable R a la signification indiquée précédemment et la variable X représente un atome d'oxygène, un atome de soufre, un groupement oxycarbonyle ou un groupement >NR² (avec R² = atome d'hydrogène ou groupement alkyle avec 1 à 4 atomes de carbone) ; et **en ce que** l'on choisit les atomes hydrolysables H dans le groupe des atomes d'hydrogène et des atomes d'halogène.

13. Sols de polysiloxane selon la revendication 12, **caractérisés en ce que** l'on choisit les groupements organiques monovalents hydrolysables H dans le groupe des groupements alcoxy ayant 1 à 4 atomes de carbone dans le radical alkyle.

14. Sols de polysiloxane selon l'une quelconque des revendications 1 à 13, **caractérisés en ce que** l'on choisit les groupements organiques liants au moins divalents L dans le groupe constitué de radicaux hydrocarbonés aliphatiques, aromatiques, cycloaliphatiques et aromatiques-cycloaliphatiques au moins divalents, ainsi que de radicaux hydrocarbonés aliphatiques, aromatiques, cycloaliphatiques et aromatiques-cycloaliphatiques contenant des hétéroatomes.

15. Sols de polysiloxane selon l'une quelconque des revendications 1 à 14, **caractérisés en ce que** l'on choisit les groupements organiques monovalents non hydrolysables R dans le groupe constitué de groupements monovalents, qui dérivent d'au moins un des composés organiques suivants :
(i) alcanes, alcènes, cycloalcanes, cycloalcènes, alkylcycloalcanes, alkylcycloalcènes, alcénylcycloalcanes ou alcénylcycloalcènes linéaires ou ramifiés, substitués ou non substitués, ne contenant aucun hétéroatome ou contenant au moins un hétéroatome dans la chaîne et/ou dans le cycle ;
(ii) substances aromatiques ou hétéroaromatiques substituées ou non substituées ; ainsi que
(iii) substances aromatiques ou hétéroaromatiques substituées par un groupement alkyle, alcényle, cycloalkyle, cycloalcényle, alkylcycloalkyle, alkylcycloalcényle, alcénylcycloalkyle ou alcénylcycloalcényle, dont les substituants sont substitués ou non et ne contiennent aucun hétéroatome ou contiennent au moins un hétéroatome dans leur chaîne et/ou leur cycle.

16. Sols de polysiloxane selon l'une quelconque des revendications 1 à 15, **caractérisés en ce que** l'indice m est égal à 0 et les indices n et p prennent une valeur de 1 à 3.

17. Sols de polysiloxane selon l'une quelconque des revendications 1 à 16, **caractérisés en ce que** la variable R¹ représente un atome d'hydrogène.

18. Sols de polysiloxane selon l'une quelconque des revendications 1 à 17, **caractérisés en ce que** les indices r et s ont une valeur de 1, l'indice t est égal à 3 et l'indice u est égal à 0.

19. Sols de polysiloxane selon l'une quelconque des revendications 1 à 19, **caractérisés en ce que** l'on choisit les agents de réticulation (B) dans le groupe constitué des polyisocyanates bloqués, des tris(alcoxycarbonylamino)triazines, des polyépoxydes, des résines aminoplastes ou des polyanhydrides.

20. Sols de polysiloxane selon la revendication 19, **caractérisés en ce que** les agents de réticulation (B) sont des résines aminoplastes.

21. Procédé de fabrication de sols de polysiloxane selon l'une quelconque des revendications 1 à 20 par hydrolyse et par condensation d'au moins deux composés de silicium hydrolysables, **caractérisé en ce que** l'on hydrolyse partiellement et on condense :
(1) dans une première étape :
(A) au moins un composé de silicium exempt de groupements carbamate, de formule générale I :
(ZₒL-)ₘSi(H)ₙ(R)ₚ (I),
dans laquelle les indices dans les variables ont la signification suivante :
o est un nombre entier de 1 à 5 ;
m est égal à 0, 1, 2 ou 3 ;
n est un nombre entier de 1 à 4 ;
p est égal à 0, 1, 2 ou 3 ;
Z est un groupement fonctionnel réactif, à l'exception d'un groupement carbamate ;
L est un groupement organique liant au moins divalent ;
H est un groupement organique monovalent hydrolysable ou un atome hydrolysable ;
R est un groupement organique monovalent non hydrolysable ;
en présence
(B) d'au moins un agent de réticulation, puis
(2) dans au moins une autre étape, on hydrolyse complètement et on condense le mélange réactionnel (1) obtenu à l'étape (1) avec :
(C) au moins un composé de silicium à fonction carbamate hydrolysable, de formule générale II :
{[HR¹N-(O)C-O-]ᵣL-}ₛSi(H)ₜ(R)ᵤ (II),
dans laquelle les variables L, H et R ont la signification indiquée précédemment et la variable R¹ et les indices ont la signification suivante :
R¹ représente un atome d'hydrogène ou un groupement R ;
r est un nombre entier de 1 à 5 ;
s est égal à 1, 2 ou 3 ;
t est égal à 1, 2 ou 3 ;
u est égal à 0, 1 ou 2.

22. Utilisation des sols de polysiloxane selon l'une quelconque des revendications 1 à 20 ou des sols de polysiloxane fabriqués selon la revendication 21 comme substances de revêtement, colles et masses d'étanchéité ainsi que pour la fabrication de corps moulés et de feuilles porteuses autonomes comme composants de substances de revêtement, de colles et de masses d'étanchéité.
